# EUROPEAN PATENT SPECIFICATION

(11) **EP 4 510 333 B1**
(45) Date of publication and mention of the grant of the patent: **12.08.2026**
(21) Application number: 24194926.2
(22) Date of filing: 16.08.2024
(51) Int. Cl.: H01M 50/213, H01M 50/244, H01M 50/264, H01M 50/284, H01M 50/517, H01M 50/519, H01M 50/249

(54) **BATTERY PACK WITH IMPROVED MECHANICAL CONNECTION**
BATTERIEPACK MIT VERBESSERTER MECHANISCHER VERBINDUNG
BLOC-BATTERIE À CONNEXION MÉCANIQUE AMÉLIORÉE

(30) Priority: 18.08.2023 BE 202305687
(43) Date of publication of application: 19.02.2025
(73) Proprietor: C-Battery bv, 9140 Temse (BE)
(72) Inventor: ROBBENS, Bjorn, 9140 Temse (BE)
(74) Representative: Brantsandpatents bv

(56) References cited:
- CN-A- 110 854 321
- CN-A- 116 454 518
- US-A1- 2021 151 835

## Description

### TECHNICAL FIELD

The invention relates to battery packs with electric cells, specifically where the cells are held in the battery pack without soldering. The battery packs should preferably serve as a compact, removable power source for electric vehicles, such as electric bicycles and/or motorcycles and/or mopeds/scooters but can also be used for cars and the like.

### PRIOR ART

Prior art battery packs include a set of electric cells that together provide the necessary power to an electrical device. In the past, these were soldered into the pack, so in case of problems, the packs were often discarded because this was more economical than deconstructing and solving the problem. Moreover, there was a high probability that during the deconstruction, further damage would be caused to the pack, making repairs more expensive or even impossible without large-scale replacement of components. Finally, manufacturing battery packs in this way is a technically cumbersome process.

For this reason, there is an increasing focus on battery packs with removable electric cells, which are therefore provided in the pack without soldering. These packs are specifically designed to make repairs and replacements easy and non-destructive, unlike the older versions.

A problem that arises with these new types, however, is the lack of certainty that the electric cells make a reliable electrical connection with the rest of the pack, and thus can supply current. Where the soldered cells had an electrical connection by default, in the new types, this is a non-fixed connection that suffers under the influence of conditions such as shocks, heat, cold, plastic deformation, material fatigue, and can lose its reliability, causing a number of cells to suddenly no longer be connected in the circuit and the battery pack can only deliver a lower power output.

The battery packs are constructed in multiple layers housed within a housing, but this structure is very sensitive to shocks, as a result of which both the cells and the printed circuit boards as well as other sensitive components can be damaged. In the prior art, superimposed layers are anchored to each other at the top and bottom sides via several techniques. Some of these are irreversible, which is undesirable. The reversible techniques, however, offer too little certainty and moreover, cause the upper and/or lower sides of the layers to partially detach from the layers over time, resulting in the layers nevertheless having play relative to each other, and in particular, relative to non-directly adjacent layers. This leads to a situation in which the layers can move relative to each other, and given the context of vehicles, where accelerations, decelerations, and shocks are common, this results in increasing play and impacts that ultimately lead to damage or even detachment of components.

The document CN110854321A (D1) discloses a manufacturing method for a modular lithium battery pack using a solder-free assembly process. The battery pack is constructed from cell units held between structural brackets that contain unit terminals for electrical contact. The entire module is secured by stacking these components and fastening them with connecting bolts that pass through the brackets. This creates a rigid unit where mechanical and electrical connections are established simultaneously without welding.

The present invention aims to find a solution for at least some of the aforementioned problems.

### SUMMARY OF THE INVENTION

The invention relates to an improved battery pack with solder-free or solder-less electric cells and is particularly aimed at providing a more suitable way to ensure the electrical connection with the electric cells in the pack.

The battery pack consists of different layers, typically identical layers, containing a multitude of elongated electric cells that are arranged parallel to each other in a regular grid structure per layer. The multi-layered structure offers the advantage that the pack can be kept compact, while at the same time the voltage per layer can be easily connected in series to provide the desired total voltage (and thus the desired power). The layers are mutually stacked with the top printed circuit board of an underlying layer adjacent to the bottom printed circuit board of the overlying layer.

Each layer comprises on the top and bottom a printed circuit board (upper and lower, although this orientation is relative), typically a PCB. This printed circuit board is equipped with electrically conductive contact zones that serve to contact the poles of the electric cells and is further provided with conductive paths to connect the contact zones according to technical requirements (power, voltage, etc.).

Preferably, each of the printed circuit boards is provided with a plurality of open holders, preferably provided as a single piece per holder, often in a grid structure (matrix, staggered, or variations thereof). These holders are used for aligning the electric cells with the contact zones on the printed circuit board. The openings of the holders are dimensioned to receive the ends of the cells without necessarily clamping them, although this is possible. For instance, by allowing a limited margin (typically in an order of magnitude of a few mm or less), the cells are well-aligned without mechanically loading the batteries. These holders also ensure that lateral pressure and forces are absorbed and the batteries cannot be damaged, providing additional structural strength to the typically sensitive printed circuit boards. The holders are made of a material that is electrically poorly conductive.

The opposing printed circuit boards are configured so that each electric cell has a contact zone on each printed circuit board, one suitable for contacting the cell's positive pole and the other for contacting the cell's negative pole. The contact zones of the top and bottom printed circuit boards, therefore, have mirrored positions, but the mirrored contact zones are suitable for contacting a mutually different pole of the cell.

The electric cells of a layer are held between the two printed circuit boards of said layer. These cells are mostly elongated, rod-shaped batteries, with a cylindrical protrusion at one end that serves as the positive pole of the battery (referred to as the cathode in Lithium-ion batteries) and a flat, conductive surface at the opposite end that forms the negative pole in practice (referred to as the anode). The side walls are equipped with an insulation layer.

The battery pack further comprises a housing and a top profile and a bottom profile, wherein the top profile is provided on the top side of the top layer, and wherein the bottom profile is provided on the underside of the bottom layer, and wherein the top profile and the bottom profile are suitable to be, preferably releasably, rigidly fixed to the housing.

The battery pack further comprises a plurality of rods, divided into a first subset with multiple rods, and a second subset with multiple rods.

The rods of the first subset extend through at least two of the layers, and preferably through all layers of the battery pack. However, they do not extend through the bottom profile and not through the top profile and are substantially perpendicular to the layers. The rods are provided with end pieces to hold the at least two layers through which they extend against each other.

The rods of the second subset extend through at least two of the layers, and preferably through all layers of the battery pack. They extend through the bottom profile and/or through the top profile and are substantially perpendicular to the layers. The rods are provided with end pieces to hold the at least two layers through which they extend and the bottom profile and/or the top profile together.

Preferably, the rods of the second subset pass through both profiles, thereby clamping the entire stack of layers and the two profiles.

By providing the rods in two separate subsets, two aspects are addressed:
On the one hand, holding the individual layers together, without allowing play to arise and grow, as in known systems. For this purpose, the rods of the first subsets serve only to hold the layers together, and this as embracing with the end pieces on both sides of the layers to be held together.

On the other hand, the anchoring to the housing is ensured. By using the second subset of rods to hold the layers to the two profiles (top and bottom profile), but not directly to the housing, a barrier is provided between the more sensitive layers and their components (printed circuit board, cells, etc.), which simultaneously allows the layers to be secured as a single unit (thanks in part to the rods of the first subset) in the housing, and rigidly anchored therein.

By using the two separately anchored sets, the risks of damage to the layers and their components are reduced, while the layers are still safely anchored within the housing.

The contact zones are preferably provided with two or more conductive, resilient fingers, which allow elastic deformation in a direction perpendicular to the printed circuit board (albeit not only in that direction). This allows the fingers to "bend in" due to the pressure of a cell that makes contact with that contact zone. This deformability compensates on the one hand for variations in the total length of the cells (so that they can always make contact, without - unless in the case of extreme variations - damaging the fingers or failing to make contact at all times), and on the other hand for any movements of the cells (sudden movement of the pack). The provision of multiple fingers permits a larger current to pass through, provides redundancy in contact, and also helps to center the cell, because the fingers keep it centered.

### DESCRIPTION OF THE FIGURES

Figures 1, 2, and 3 show perspectives of a battery pack according to an embodiment of the invention, with two layers of electric cells.
Figures 4 and 5 show the front and back sides of printed circuit boards used in the battery pack of the invention, according to Figures 1 - 3.

### DETAILED DESCRIPTION

Unless otherwise defined, all terms used in the description of the invention, including technical and scientific terms, have the meanings as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, this must be understood to mean that the value of the magnitude where the term "approximately" or "around" is used, is itself specifically disclosed.

The terms "comprise," "comprising," "consist of," "consisting of," "provided with," "have," "having," "include," "including," "contain," "containing" are synonyms and are inclusive or open terms that indicate the presence of what follows, and which do not exclude or prevent the presence of other components, characteristics, elements, members, steps, as known from or disclosed in the prior art.

Quoting numeric intervals by the endpoints includes all integers, fractions, and/or real numbers between the endpoints, including those endpoints.

In a first aspect, the invention relates to a battery pack as described in the summary of the invention.

The advantages of the proposed system include the robustness with which the individual layers are interconnected and anchored to the housing of the battery pack, while still allowing the layers to be easily detached from the housing and each other and opened. As previously discussed, existing solder-free systems have a structure in which successive layers are interconnected via a number of mechanical systems, and these are then placed in a form-fitting housing. However, there is always some play due to small variations in the housing and battery layers, resulting in the possibility of relative movement between the battery layers and the housing, thus potentially causing damage. Alternatively, the battery layers can be anchored in the housing, but this is always done by anchoring the outer layers (bottom and top). However, this presents the same problem, because play is possible between layers.

By working with two subsets that anchor the layers in a different manner, this play is almost completely eliminated. The first subsets anchor layers to each other, with virtually no play already, and the second subset then embraces the layers using two outer profiles, thereby pushing the layers against each other in such a manner that play is made impossible.

The outer profiles then provide a mechanically reliable intermediate component that enables anchoring to the housing. By making the anchoring indirect for the layers, the risk of mechanical damage is drastically reduced.

According to a preferred embodiment, the first subset comprises at least 3 rods, wherein the rods of the first subset are not positioned coplanarly with respect to each other. This means that the points where the rods of the subset intersect the printed circuit boards are not colinear. In this way the mechanical stress on the whole is reduced. Preferably, there are at least 4, 5, 6, 8, or more rods provided in the first subset, and these are typically substantially evenly distributed across the surface of the profiles, in order to distribute the load as much as possible, thereby avoiding potential breaking points or lines. For example, a grid structure can be used, in which the rods have a similar distance between them.

According to a preferred embodiment, the second subset comprises at least 3 rods, wherein the rods of the second subset are not positioned coplanar to each other. This means that the points where the rods of the subset intersect the printed circuit boards are not colinear. In this way the mechanical stress on the whole is reduced. Preferably, there are at least 4, 5, 6, 8, or more rods provided in the first subset, and these are typically substantially evenly distributed across the surface of the profiles, in order to distribute the load as much as possible, thereby avoiding potential breaking points or lines. For example, a grid structure can be used, in which the rods have a similar distance between them.

The above embodiments are preferably combined, so that good distribution of forces is created on both the printed circuit boards and the profiles. The rods of the subsets can alternate and thus have an even distribution, for example in a grid structure or a staggered structure.

In a further preferred embodiment, the cells are provided in a grid structure in the layers, preferably in rows and columns or in staggered rows, wherein the rods of the first subset are distributed in a regular structure at points where three or more cells adjoin each other.

A placement in a matrix structure (rows and columns) or in staggered rows ensures that the cells are divided into clusters of respectively 4 or 3 cells, with the cells per cluster adjoining at one point. The rods of the first subset are provided at these points (without being provided at each of these points, to avoid creating overlap and to allow space for the rods of the second subset). At these positions, there is sufficient space to provide a rod through the structure, without taking away space for cells. In this manner, an optimal power density is achieved in the battery pack.

The rods of the second subset are similarly distributed, at points where three or more cells adjoin each other. The rods of the second subset are not necessarily distributed such that each cluster is provided with such a rod, although this is possible in some embodiments.

This structure offers the same advantages as described above, and moreover, can be combined with the above by staggering the cluster distribution of cells for the first subset. In this manner, a large number of cells are held by at least two separate rods, typically even three, and this is often with a common neighboring cell (particularly in a grid structure with rows and columns) and one or two others. In this way, neighboring clusters are anchored to each other, and each layer receives additional structural reinforcement.

In a further preferred embodiment, the cells are divided into clusters of three or four adjacent cells, with each cluster provided with a rod extending centrally between the cells of the cluster, wherein it is not further specified whether this rod belongs to the first or second subset.

In a further preferred embodiment, all cells belong to at least one cluster, and preferably only one cluster. Thus, it is ensured that each cell is adjacent to at least one rod.

According to a preferred embodiment, the rods of the second subset are provided such that they are positioned between, and adjacent to, the cells of at least two separate clusters. As stated, this provides the added reinforcement that adjacent clusters are anchored to each other.

According to a preferred embodiment, at least one insulation layer is provided between the printed circuit boards of successive layers, with at least one insulation layer provided between the top layer and the top profile and between the bottom layer and the bottom profile. Preferably, multiple insulation layers are provided between the layers and the profiles.

Hereby, the rods of the first subset and the rods of the second subset extend through the insulation layers, wherein the rods of the first subset preferably engage directly on said insulation layer between the top layer and the top profile and between the bottom layer and the bottom profile.

By also using the insulation layers and engaging them, it is avoided that the rods of the first subset need to engage the top or bottom printed circuit board of a layer, in order to prevent damage. Furthermore, the rods are typically made of a conductive material, and it is safer to keep them as far away from the printed circuit boards as possible. Preferably, the rods of both the first and second subset extend through all layers, thereby connecting each of the layers with one another, and optionally also with the profiles.

In a further preferred embodiment, the end pieces of the rods of the first subset are at least partially, preferably completely, recessed in recesses in the said insulation layer between the top layer and the top profile.

In a further preferred embodiment, the end pieces of the rods of the first subset are at least partially, preferably completely, recessed in recesses in the said insulation layer between the bottom layer and the bottom profile.

Preferably, the two above-mentioned further preferred embodiments are combined with each other.

The recessed configuration allows the profiles and/or the housing to be positioned as closely as possible to the insulation layers (or other layers), thereby preventing any play that could cause damage, and also allows for optimal use of the space.

According to a preferred embodiment, the rods of the second subset engage directly on the top profile and/or the bottom profile, preferably on both. The top/bottom profile is typically made from a sturdy material, such as steel for example, so that it provides a good basis for mechanical anchoring and can securely bear the load from the rods.

According to a preferred embodiment, the end pieces of the rods at a first end comprise a widened head, and at a second end a removable widened head. Preferably, the removable widened head concerns a nut, and more preferably, it is provided with a retaining ring.

With such a configuration, the rods can be easily placed and likewise removed during repair or deconstruction, which benefits the product's circularity.

According to a preferred embodiment, the top printed circuit board of each layer is provided with a plurality of open holders dimensioned to receive the first end of the electric cells and to align the received first end with one of the conductive contact zones. Alternatively or additionally, the bottom printed circuit board of each layer is provided with a plurality of open holders dimensioned for receiving the second end of the electric cells and aligning the received second end with one of the conductive contact zones. The printed circuit boards are here provided with holes. The open holders are provided with holes perpendicular to the printed circuit board. The rods extend through the holes of the printed circuit boards and the open holders, and the holes of the printed circuit boards and the holes of the open holders are aligned.

Preferably, the holes of the open holders have a smaller diameter than the aligned holes in the printed circuit boards.

The use of holders ensures that on the one hand the cells are partially fixed, in order to minimize movement possibilities and prevent damage. Thus, the cells are separated from each other, but minimally enough to impact the power density as little as possible. Additionally, the presence of the open holders allows the rods to also be guided in a safe manner. By securing the rods with the open holders (in a certain sense), the printed circuit boards are safeguarded from possible damaging contacts with the rods during sudden movements (acceleration, deceleration, impacts, etc.). This is guaranteed by aligning the pre-provided holes of the printed circuit boards with those of the open holders and making the holes of the printed circuit boards larger than those of the open holders, so that the holes of the open holders are completely positioned within those of the printed circuit boards, ensuring that the rods can at no point come into direct contact with the printed circuit boards. The open holders are sturdy enough to withstand these contacts, and the sensitive printed circuit boards are spared.

In a preferred embodiment, the end pieces of the rods of the first subset are recessed into recesses in the top profile and/or bottom profile. The recessed configuration allows the profiles and/or the housing to be positioned as closely as possible to the insulation layers (or other layers), thereby preventing any play that could cause damage, and also allows for optimal use of the space.

According to a preferred embodiment, the cells are provided in rows and columns per layer, wherein the cells are subdivided into non-overlapping clusters of two by two cells, and wherein a rod from the first subset is provided through the center of each cluster. According to a preferred embodiment, the top profile has a curved flange, which lies against a lateral side of the top layer and is detachably mechanically connected to the curved flange of the top layer.

According to a preferred embodiment, the bottom profile has a curved flange, which lies against a lateral side of the bottom layer and is detachably mechanically connected to the curved flange of the bottom layer.

Preferably, both the top and bottom profiles have a curved flange as discussed above. In what follows, the invention is described by way of non-limiting examples illustrating the invention, and which are not intended to and should not be interpreted as limiting the scope of the invention, which is defined by the appended claims.

### EXAMPLES

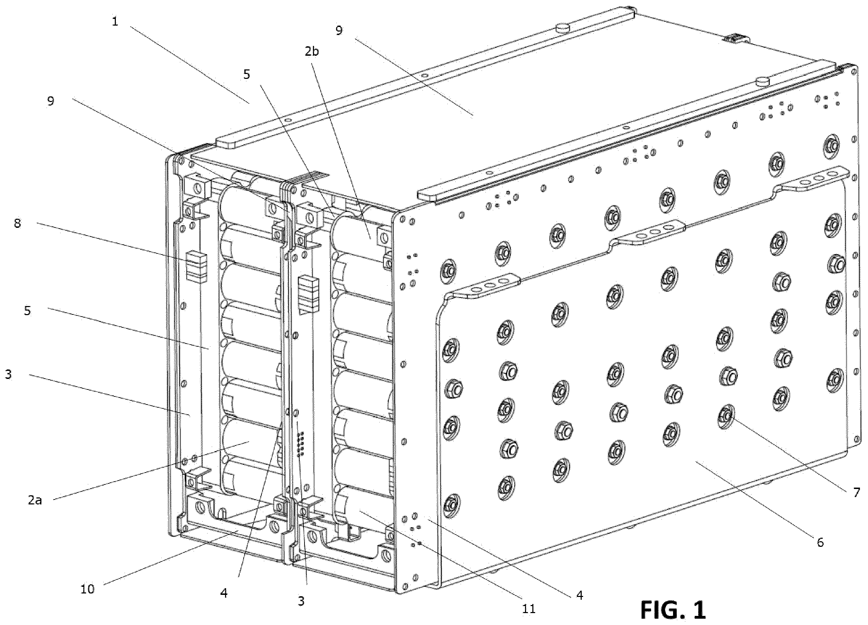

Figures 1, 2, and 3 show a battery pack (1) according to the invention from different perspectives, with two layers (2a, 2b) of electric cells (11), held together in a mechanical casing (6).

The electric cells (11) are arranged in rows in which all cells are oriented in the same direction, and contact printed circuit boards (3, 4) on both sides, a top (3) and a bottom (4) printed circuit board. Holders (5) are provided on this, which have openings in which the ends of the electric cells (11) fit, to hold them in place and to space them apart.

These holders (5) have an ordered structure, typically in rows and columns or in staggered rows, to maximize power density, while providing sufficient strength and electrically isolating the cells.

The printed circuit boards (4, 3) are connected back to back between adjacent layers (2a, 2b), typically still separated by intermediate insulation layers (9). Such insulation layers (9) or insulation shields may also be provided on one or more sides of the battery pack (1).

The layers (2a, 2b) are held together by spokes or rods () that extend through the layers (2a, 2b), between the electric cells (11), and through the printed circuit boards (3, 4) and insulation layers (9) at the bottom and top of the battery pack (1). In some positions, a rigid top or bottom profile (6) is also provided on the outside of the battery pack (1), on the insulation layers (9), through which rods of the second subset (7) extend and anchor, while the rods of the first subset (7) only extend through the printed circuit boards, but not through the bottom profile/top profile (6).

Additional connectors (8) can be provided on the printed circuit boards (3, 4), on which electrical connections can be made for reading voltage, temperature, and other parameters. Additionally, these connectors can also be used for mechanical support and anchoring of the battery pack, for example, for fastening in a housing.

Further, output busbars (10) are also provided between the printed circuit boards (3, 4) of a layer, at the sides/corners thereof, which serve for electrically connecting the printed circuit boards, and provide additional support between the printed circuit boards, as these busbars typically have great structural strength.

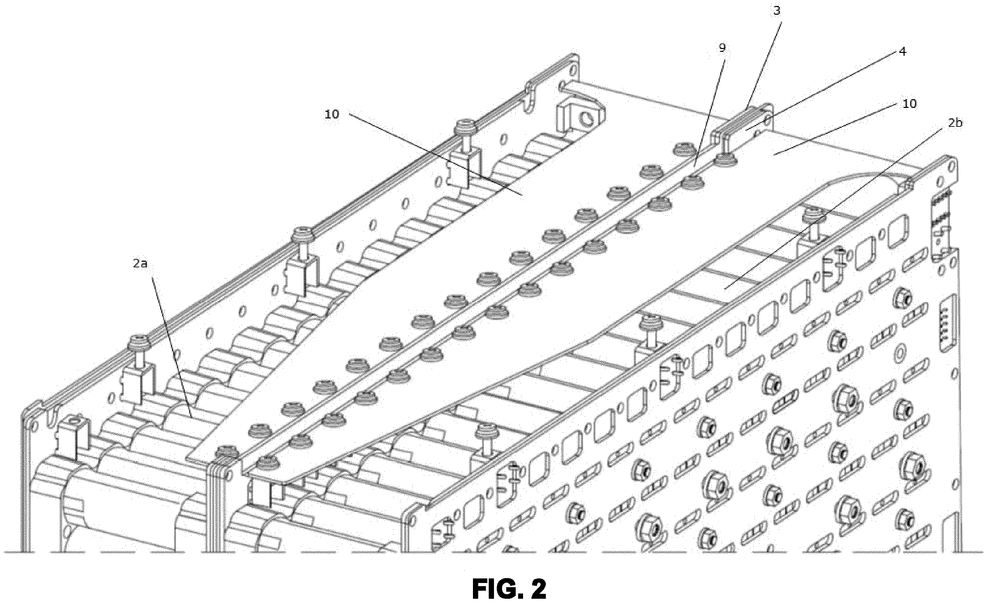

The output busbars extend over a substantial part of a side of the battery pack, for optimal distribution of the current (and thereby heat due to the Joule effect), as seen in Figure 2. The two busbars (10), one per layer (2a, 2b), are separated by an insulation layer (9).

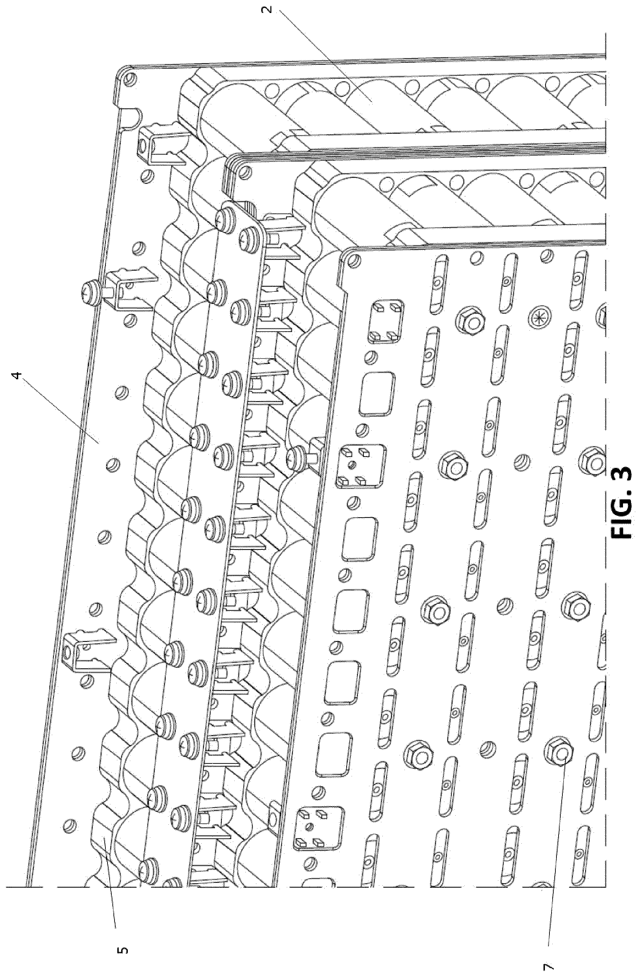

The adjacent printed circuit boards (4, 3) of two adjoining layers (2a, 2b), as seen in Figure 3 for example, are connected via power output terminals on both printed circuit boards, which are connected via a serial connector busbar (12) and thus form a parallel circuit that allows for high current capacity.

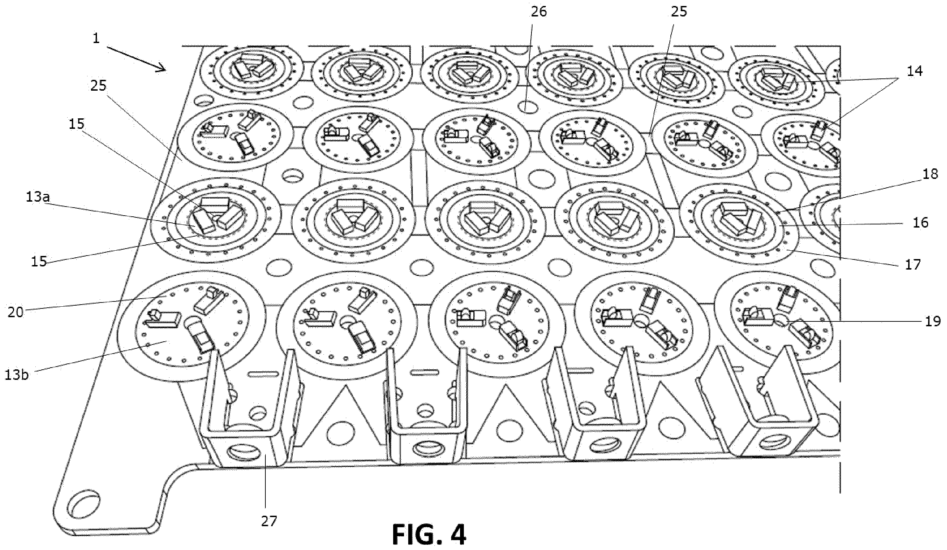

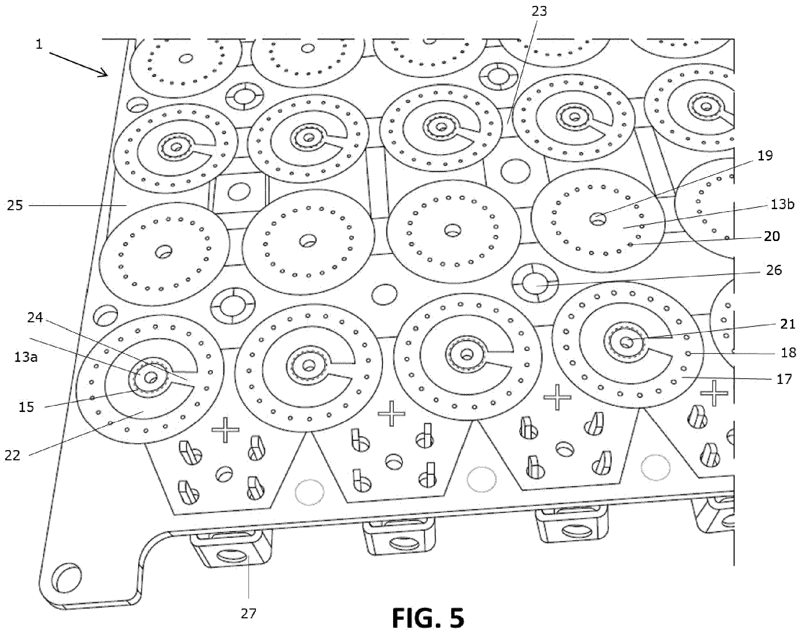

Finally, Figures 4 and 5 show the printed circuit boards (3, 4) with conductive contact zones (13). The conductive contact zones comprise a number of resilient fingers (14). As can be seen, the resilient fingers (14) are provided in two configurations (13a, 13b), with each row alternating in configuration with its neighbors.

The first configuration (13a) has three resilient fingers (14) directed away from a center of the contact zone (13), and radially directed.

The second configuration (13b) also has three resilient fingers (14) which are tangentially positioned around the center of the contact zone (13).

The first conductive contact zone (13a) is circular and provided with a vertical interconnect access (VIA) (15) at the center of the first conductive contact zone (13a). Each first conductive contact zone (13a) is further provided with preferably three conductive resilient fingers (14). The conductive resilient fingers (14) are rectangular and are positioned with a long side toward the center. Next, a first ring of VIAs (15) is provided towards the outer edge of the first conductive contact zone (13a). Adjacent to the first conductive contact zone (13a), an annular solder mask layer (16) is provided. Adjacent to this solder mask layer (16), a conductive outer ring (17) is provided. A second ring of VIAs (18) can be observed on this conductive outer ring.

The second conductive contact zone (13b) is circular and provided with a VIA (19) at the center of the second conductive contact zone (13b). Every second conductive contact zone (13b) is further provided with preferably three conductive resilient fingers (14). The conductive resilient fingers are rectangular and are positioned with a short side towards the center. Subsequently, a ring of VIAs (20) is positioned between the resilient fingers (14) and an outer circumference of the second conductive contact zone (13b).

Figure 5 shows the back side of a printed circuit board (3, 4). Alternating rows of conductive contact zones can be observed on the back side of the printed circuit board (3, 4). A first row comprises first conductive contact zones (13a) for electrically conductive contacting of the positive poles. A second row comprises second conductive (13b) contact zones for electrically conductive contacting of the negative poles, and so forth.

The first conductive contact zone (13a) is circular and provided with a (VIA) (21) in the center of the first conductive contact zone (13a); this VIA (21) corresponds to the VIA (21) of the center of the cell side (side facing the cells) of the printed circuit board. Subsequently, a circular solder mask layer (22) is provided adjacent to the first conductive contact zone (13a). A first ring (15) of VIAs is positioned between the solder mask layer (22) and the VIA (21) at the center of the first conductive contact zone. Further, the annular solder mask layer (22) is interrupted by a fuse strip (23). Adjacent to the solder mask layer (22) lies a conductive outer ring (17), wherein the conductive outer ring (17) is provided with a second ring of VIAs (18). The VIAs of the first ring (15) and the second ring (18) of the back side of the printed circuit board (3, 4) correspond respectively to the VIAs of the first ring (15) and the second ring (18) of the cell side of the printed circuit board.

The second conductive contact zone (13b) is circular and provided with a VIA (19) at the center of the second conductive contact zone (13b); this VIA (19) corresponds to the VIA (19) at the center of the cell side of the printed circuit board. Further, a ring of VIAs (20) is provided on the second conductive contact zone (13b), positioned correspondingly with those of the second conductive contact zones of the cell side of the printed circuit board.

Both in figure 4 and in figure 5, parallel connections (24) between the cells within a P-group are visible. There are also serial connections (25) observable between each p-group using the widest possible copper to prevent voltage drop. Further, marked holes (26) are observable, these holes indicate the location of the compression bolts/spokes. Finally, Figures 4 and 5 show the power output terminals (27), which are connected in parallel to allow for a higher current load.

The present invention should not be construed as being limited to the embodiments described above and certain modifications or changes may be added to the examples described as long as they fall within the scope of the appended claims.

For example, the present invention has been described with reference to electric vehicles, but it should be clear that the invention can be applied to, for instance, home batteries and other stationary electronic devices.

The present invention should not be construed as being limited to the embodiments described above and certain modifications or changes may be added to the examples described as long as they fall within the scope of the appended claims.

For example, the present invention has been described with reference to electric vehicles, but it should be clear that the invention can be applied to, for instance, home batteries and other stationary electronic devices.

## Claims

1. Battery pack (1) for electronic devices, preferably for electric vehicles such as bicycles and/or motorcycles, comprising multiple layers and a housing, each layer comprising:
a. a plurality of elongated electric cells held solder-free in the layer, having a positive pole at a first end, and a negative pole at a second, opposite end;
b. a top printed circuit board comprising a plurality of first conductive contact zones (13a) for electrically conductive contacting of the positive or negative pole of the electric cells;
c. a bottom printed circuit board comprising a plurality of second conductive contact zones (13b) for electrically conductive contacting of the negative or positive pole of the electric cells;
wherein the electric cells of each layer are held solder-free between the top and bottom printed circuit (3,4) board of the layer;
wherein the layers are mutually stacked with the top printed circuit board of an underlying layer adjacent to the bottom printed circuit board of the overlying layer;
further comprising a top profile and a bottom profile (6), wherein the top profile is provided on the top side of the top layer, and wherein the bottom profile (6) is provided on the bottom of the bottom layer, and wherein the top profile and the bottom profile (6) are suitable to be, preferably releasably, rigidly fixed to the housing;
wherein the battery pack comprises a plurality of rods (7), wherein
the rods comprise a first subset of multiple rods and a second subset of multiple rods;
wherein the rods of the first subset extend through at least two layers, preferably through all layers of the battery pack, and not through the bottom profile (6) and not through the top profile, substantially perpendicular to the layers, and wherein the rods of the first subset are provided with end pieces suitable to hold the at least two layers together,
wherein the rods of the second subset extend through at least two layers (2a, 2b), preferably through all layers of the battery pack, and through the top profile and/or the bottom profile (6), substantially perpendicular to the layers, and wherein the rods of the second subset are provided with end pieces suitable for holding the at least two layers and the top profile and/or bottom profile (6) together
**characterised in that**
at least one insulation layer (9) is provided between the printed circuit boards of successive layers, and at least one insulation layer (9) is provided between the top layer and the top profile and between the bottom layer and the bottom profile (6); and
the rods of the first subset and the rods of the second subset extend through the insulation layers (9), and the rods of the first subset preferably engage directly on said insulation layer (9) between the top layer and the top profile and between the bottom layer and the bottom profile (6).

2. The battery pack according to the preceding claim 1, wherein the first subset and/or the second subset comprise at least 3 rods, and wherein the rods of said first and/or second subset are not positioned coplanar with each other.

3. The battery pack according to any of the preceding claims 1 to 2, wherein the cells are provided in a grid structure in the layers, preferably in rows and columns or in staggered rows, wherein the rods of the first subset are distributed in a regular structure at points where three or more cells adjoin each other.

4. The battery pack according to any of the preceding claims 1 to 3, wherein the cells are divided into clusters of three or four adjacent cells, and wherein for each cluster a rod is provided which extends centrally between the cells of the cluster.

5. The battery pack according to the preceding claim 4, wherein all cells belong to at least one cluster, preferably to only one cluster.

6. The battery pack according to any of the preceding claims 4 or 5, wherein the rods of the second subset are provided between the cells of at least two separate clusters.

7. The battery pack according to any of the preceding claims 1 to 6, wherein the end pieces of the rods of the first subset are at least partially recessed in recesses in said insulation layer (9) between the top layer and the top profile and/or in said insulation layer (9) between the bottom layer and the bottom profile (6).

8. The battery pack according to any of the preceding claims 1 to 7, wherein the rods of the second subset directly engage the top profile and/or the bottom profile (6), preferably both.

9. The battery pack according to any of the preceding claims 1 to 8, wherein the end pieces of the rods at a first end comprise an enlarged head, and at a second end comprise a removable enlarged head, preferably wherein the removable enlarged head concerns a nut, and more preferably is provided with a retaining ring.

10. The battery pack according to any of the preceding claims 1 to 9, wherein the top printed circuit board of each layer is provided with a plurality of open holders (5) dimensioned for receiving the first end of the electric cells and aligning the received first end with one of the conductive contact zones (13), and/or wherein the bottom printed circuit board of each layer is provided with a plurality of open holders (5) dimensioned for receiving the second end of the electric cells and aligning the received second end with one of the conductive contact zones (13), wherein the printed circuit boards are provided with holes, and wherein said open holders (5) are provided with holes perpendicular to the printed circuit board, wherein the rods extend through the holes of the printed circuit boards and the open holders (5), and wherein the holes of the printed circuit boards and the holes of the open holders are aligned.

11. The battery pack according to the preceding claim 10, wherein the holes in the open holders have a smaller diameter than the aligned holes in the printed circuit boards.

12. The battery pack according to any of the preceding claims 1 to 11, wherein the end pieces of the rods of the first subset are recessed in recesses in the top profile and/or bottom profile (6).

13. The battery pack according to any of the preceding claims 1 to 12, wherein the cells are arranged in rows and columns per layer, and wherein the cells are divided into non-overlapping clusters of two by two cells, and wherein a rod from the first subset is provided through the center of each cluster.

14. The battery pack according to any of the preceding claims 1 to 13, wherein the top profile and/or the bottom profile (6) has a curved flange, which lies against a lateral side of the respective top and/or bottom layer and is releasably mechanically connected to the curved flange on the respective top and/or bottom layer.

## Patentansprüche

1. Batteriepack (1) für elektronische Vorrichtungen, vorzugsweise für Elektrofahrzeuge wie beispielsweise Fahrräder und/oder Motorräder, mehrere Schichten und ein Gehäuse umfassend, wobei jede Schicht Folgendes umfasst:
a) mehrere längliche elektrische Zellen, die lotfrei in der Schicht gehalten sind, die einen positiven Pol an einem ersten Ende und einen negativen Pol an einem zweiten, gegenüberliegenden Ende aufweisen,
b) eine obere Leiterplatte, die mehrere erste leitende Kontaktzonen (13a) für elektrisch leitendes Kontaktieren des positiven oder des negativen Pols der elektrischen Zellen umfasst,
c) eine untere Leiterplatte, die mehrere zweite leitende Kontaktzonen (13b) für elektrisch leitendes Kontaktieren des negativen oder des positiven Pols der elektrischen Zellen umfasst,
wobei die elektrischen Zellen jeder Schicht lotfrei zwischen der oberen und der unteren Leiterplatte (3, 4) der Schicht gehalten sind,
wobei die Schichten aufeinander gestapelt sind, wobei die obere Leiterplatte einer darunterliegenden Schicht an die untere Leiterplatte der darüberliegenden Schicht grenzt,
ferner ein oberes Profil und ein unteres Profil (6) umfassend, wobei das obere Profil an der Oberseite der oberen Schicht bereitgestellt ist und wobei das untere Profil (6) an der Unterseite der unteren Schicht bereitgestellt ist und wobei das obere Profil und das untere Profil (6) dazu geeignet sind, vorzugsweise lösbar starr am Gehäuse befestigt zu sein,
wobei das Batteriepack mehrere Stäbe (7) umfasst, wobei die Stäbe einen ersten Teilsatz mehrerer Stäbe und einen zweiten Teilsatz mehrerer Stäbe umfassen,
wobei sich die Stäbe des ersten Teilsatzes durch mindestens zwei Schichten, vorzugsweise durch alle Schichten des Batteriepacks und nicht durch das untere Profil (6) und nicht durch das obere Profil, im Wesentlichen senkrecht zu den Schichten erstrecken und wobei die Stäbe des ersten Teilsatzes mit Endstücken versehen sind, die dazu geeignet sind, die mindestens zwei Schichten zusammenzuhalten,
wobei sich die Stäbe des zweiten Teilsatzes durch mindestens zwei Schichten (2a, 2b), vorzugsweise durch alle Schichten des Batteriepacks und durch das obere Profil und/oder das untere Profil (6), im Wesentlichen senkrecht zu den Schichten erstrecken und wobei die Stäbe des zweiten Teilsatzes mit Endstücken versehen sind, die dazu geeignet sind, die mindestens zwei Schichten sowie das obere Profil und/oder das untere Profil (6) zusammenzuhalten,
**dadurch gekennzeichnet, dass** zwischen den Leiterplatten aufeinanderfolgender Schichten mindestens eine Isolationsschicht (9) bereitgestellt ist und zwischen der oberen Schicht und dem oberen Profil sowie zwischen der unteren Schicht und dem unteren Profil (6) mindestens eine Isolationsschicht (9) bereitgestellt ist,
und sich die Stäbe des ersten Teilsatzes und die Stäbe des zweiten Teilsatzes durch die Isolationsschichten (9) erstrecken und die Stäbe des ersten Teilsatzes vorzugsweise direkt an der Isolationsschicht (9) zwischen der oberen Schicht und dem oberen Profil sowie zwischen der unteren Schicht und dem unteren Profil (6) in Eingriff stehen.

2. Batteriepack nach dem vorhergehenden Anspruch 1, wobei der erste Teilsatz und/oder der zweite Teilsatz mindestens 3 Stäbe umfassen und wobei die Stäbe des ersten und/oder des zweiten Teilsatzes nicht koplanar miteinander angeordnet sind.

3. Batteriepack nach einem der vorhergehenden Ansprüche 1 bis 2, wobei die Zellen in einer Gitterstruktur in den Schichten bereitgestellt sind, vorzugsweise in Reihen und Spalten oder in gestaffelten Reihen, wobei die Stäbe des ersten Teilsatzes in einer regelmäßigen Struktur an Punkten verteilt sind, an denen drei oder mehr Zellen aneinanderstoßen.

4. Batteriepack nach einem der vorhergehenden Ansprüche 1 bis 3, wobei die Zellen in Gruppen aus drei oder vier benachbarten Zellen eingeteilt sind und wobei für jede Gruppe ein Stab bereitgestellt ist, der sich mittig zwischen den Zellen der Gruppe erstreckt.

5. Batteriepack nach dem vorhergehenden Anspruch 4, wobei alle Zellen zu mindestens einer Gruppe gehören, vorzugsweise zu nur einer Gruppe.

6. Batteriepack nach dem vorhergehenden Anspruch 4 oder 5, wobei die Stäbe des zweiten Teilsatzes zwischen den Zellen von mindestens zwei separaten Gruppen bereitgestellt sind.

7. Batteriepack nach einem der vorhergehenden Ansprüche 1 bis 6, wobei die Endstücke der Stäbe des ersten Teilsatzes mindestens teilweise in Vertiefungen in der Isolationsschicht (9) zwischen der oberen Schicht und dem oberen Profil und/oder in der Isolationsschicht (9) zwischen der unteren Schicht und dem unteren Profil (6) eingelassen sind.

8. Batteriepack nach einem der vorhergehenden Ansprüche 1 bis 7, wobei die Stäbe des zweiten Teilsatzes direkt in Eingriff mit dem oberen Profil und/oder dem unteren Profil (6) stehen, vorzugsweise mit beiden.

9. Batteriepack nach einem der vorhergehenden Ansprüche 1 bis 8, wobei die Endstücke der Stäbe an einem ersten Ende einen vergrößerten Kopf umfassen und an einem zweiten Ende einen entfernbaren vergrößerten Kopf umfassen, wobei es sich bei dem entfernbaren vergrößerten Kopf vorzugsweise um eine Mutter handelt und er bevorzugter mit einem Sprengring versehen ist.

10. Batteriepack nach einem der vorhergehenden Ansprüche 1 bis 9, wobei die obere Leiterplatte jeder Schicht mit mehreren offenen Haltern (5) versehen ist, die zum Aufnehmen des ersten Endes der elektrischen Zellen bemessen sind und das aufgenommene erste Ende an einer der leitenden Kontaktzonen (13) ausrichten, und/oder wobei die untere Leiterplatte jeder Schicht mit mehreren offenen Haltern (5) versehen ist, die zum Aufnehmen des zweiten Endes der elektrischen Zellen bemessen sind und das aufgenommene zweite Ende an einer der leitenden Kontaktzonen (13) ausrichten,
wobei die Leiterplatten mit Löchern versehen sind und wobei die offenen Halter (5) mit Löchern senkrecht zu der Leiterplatte versehen sind, wobei sich die Stäbe durch die Löcher der Leiterplatten und der offenen Halter (5) erstrecken und wobei die Löcher der Leiterplatten und die Löcher der offenen Halter aneinander ausgerichtet sind.

11. Batteriepack nach dem vorhergehenden Anspruch 10, wobei die Löcher in dem offenen Haltern einen kleineren Durchmesser als die ausgerichteten Löcher in den Leiterplatten aufweisen.

12. Batteriepack nach einem der vorhergehenden Ansprüche 1 bis 11, wobei die Endstücke der Stäbe des ersten Teilsatzes in Vertiefungen in dem oberen Profil und/oder dem unteren Profil (6) eingelassen sind.

13. Batteriepack nach einem der vorhergehenden Ansprüche 1 bis 12, wobei die Zellen in Reihen und Spalten pro Schicht angeordnet sind und wobei die Zellen in nicht-überlappende Gruppen von zwei mal zwei Zellen eingeteilt sind und wobei ein Stab aus dem ersten Teilsatz durch die Mitte jeder Gruppe hindurch bereitgestellt ist.

14. Batteriepack nach einem der vorhergehenden Ansprüche 1 bis 13, wobei das obere Profil und/oder das untere Profil (6) einen gekrümmten Kragen aufweist/aufweisen, der an einer lateralen Seite der entsprechenden oberen und/oder unteren Schicht anliegt und lösbar mechanisch mit dem gekrümmten Kragen an der entsprechenden oberen und/oder unteren Schicht verbunden ist.

## Revendications

1. Bloc-batterie (1) pour dispositifs électroniques, de préférence pour des véhicules électriques tels que des bicyclettes et/ou des motocyclettes, comprenant de multiples couches et un boîtier, chaque couche comprenant:
a. une pluralité de cellules électriques allongées maintenues sans soudure dans la couche, ayant un pôle positif à une première extrémité et un pôle négatif à une seconde extrémité opposée;
b. une carte de circuit imprimé supérieure comprenant une pluralité de premières zones de contact conductrices (13a) pour le contact électriquement conducteur du pôle positif ou négatif des cellules électriques;
c. une carte de circuit imprimé inférieure comprenant une pluralité de secondes zones de contact conductrices (13b) pour le contact électriquement conducteur du pôle négatif ou positif des cellules électriques;
dans lequel les cellules électriques de chaque couche sont maintenues sans soudure entre les cartes de circuit imprimé (3,4) supérieure et inférieure de la couche;
dans lequel les couches sont empilées mutuellement, avec la carte de circuit imprimé supérieure d'une couche sous-jacente adjacente à la carte de circuit imprimé inférieure de la couche sus-jacente
comprenant en outre un profilé supérieur et un profilé inférieur (6), dans lequel le profilé supérieur est situé sur le côté supérieur de la couche supérieure, et dans lequel le profilé inférieur (6) est situé sur le dessous de la couche inférieure, et dans lequel le profilé supérieur et le profilé inférieur (6) sont aptes à être fixés rigidement, de préférence de manière amovible, au boîtier;
dans lequel le bloc-batterie comprend une pluralité de tiges (7), dans lequel les tiges comprennent un premier sous-ensemble de tiges multiples et un second sous-ensemble de tiges multiples;
dans lequel les tiges du premier sous-ensemble s'étendent à travers au moins deux couches, de préférence toutes les couches du bloc-batterie, mais pas à travers le profilé inférieur (6) ni à travers le profilé supérieur, sensiblement perpendiculairement aux couches, et dans lequel les tiges du premier sous-ensemble sont pourvues d'embouts aptes à maintenir ensemble les au moins deux couches,
dans lequel les tiges du second sous-ensemble s'étendent à travers au moins deux couches (2a, 2b), de préférence toutes les couches du bloc-batterie, et à travers le profilé supérieur et/ou le profilé inférieur (6), sensiblement perpendiculairement aux couches, et dans lequel les tiges du second sous-ensemble sont pourvues d'embouts aptes à maintenir ensemble les au moins deux couches et le profile supérieur et/ou le profilé inférieur (6)
**caractérisé en ce qu'**au moins une couche d'isolation (9) est prévue entre les cartes de circuit imprimé de couches successives, et qu'au moins une couche d'isolation (9) est prévue entre la couche supérieure et le profilé supérieur et entre la couche inférieure et le profilé inférieur (6);
et les tiges du premier sous-ensemble et les tiges du second sous-ensemble s'étendent à travers les couches d'isolation (9), et les tiges du premier sous-ensemble s'engagent de préférence directement sur ladite couche d'isolation (9) entre la couche supérieure et le profilé supérieur et entre la couche inférieure et le profilé inférieur (6).

2. Bloc-batterie selon la revendication précédente 1, dans lequel le premier sous-ensemble et/ou le second sous-ensemble comprennent au moins 3 tiges, et dans lequel les tiges dudit premier et/ou second sous-ensemble ne sont pas positionnées de manière coplanaire les unes par rapport aux autres.

3. Bloc-batterie selon l'une quelconque des revendications précédentes 1 à 2, dans lequel les cellules sont fournies dans une structure de grille dans les couches, de préférence en rangées et en colonnes ou en rangées décalées, dans lequel les tiges du premier sous-ensemble sont distribuées dans une structure régulière à des points où trois cellules ou plus sont adjacentes les unes aux autres.

4. Bloc-batterie selon l'une quelconque des revendications précédentes 1 à 3, dans lequel les cellules sont divisées en groupes de trois ou quatre cellules adjacentes et dans lequel, pour chaque groupe, une tige est prévue qui s'étend au centre entre les cellules du groupe.

5. Bloc-batterie selon la revendication 4 précédente, dans lequel toutes les cellules appartiennent à au moins un groupe, de préférence à un seul groupe.

6. Bloc-batterie selon l'une quelconque des revendications précédentes 4 ou 5, dans lequel les tiges du second sous-ensemble sont situées entre les cellules d'au moins deux groupes distincts.

7. Bloc-batterie selon l'une quelconque des revendications précédentes 1 à 6, dans lequel les embouts des tiges du premier sous-ensemble sont au moins partiellement encastrés dans des renfoncements de ladite couche d'isolation (9) entre la couche supérieure et le profilé supérieur et/ou dans ladite couche d'isolation (9) entre la couche inférieure et le profilé inférieur (6).

8. Bloc-batterie selon l'une quelconque des revendications précédentes 1 à 7, dans lequel les tiges du second sous-ensemble s'engagent directement dans le profilé supérieur et/ou le profilé inférieur (6), de préférence les deux.

9. Bloc-batterie selon l'une quelconque des revendications précédentes 1 à 8, dans lequel les embouts des tiges au niveau d'une première extrémité comprennent une tête élargie, et au niveau d'une seconde extrémité comprennent une tête élargie amovible, de préférence dans lequel la tête élargie amovible concerne un écrou, et plus préférentiellement est pourvue d'une bague de retenue.

10. Bloc-batterie selon l'une quelconque des revendications précédentes 1 à 9, dans lequel la carte de circuit imprimé supérieure de chaque couche est pourvue d'une pluralité de supports ouverts (5) dimensionnés pour recevoir la première extrémité des cellules électriques et aligner la première extrémité reçue avec l'une des zones de contact conductrices (13), et/ou dans lequel la carte de circuit imprimé inférieure de chaque couche est pourvue d'une pluralité de supports ouverts (5) dimensionnés pour recevoir la seconde extrémité des cellules électriques et aligner la seconde extrémité reçue avec l'une des zones de contact conductrices (13),
dans lequel les cartes de circuit imprimé sont munies de trous, et dans lequel lesdits supports ouverts (5) sont munis de trous perpendiculaires à la carte de circuit imprimé, dans lequel les tiges s'étendent à travers les trous des cartes de circuit imprimé et des supports ouverts (5), et dans lequel les trous des cartes de circuit imprimé et les trous des supports ouverts sont alignés.

11. Bloc-batterie selon la revendication précédente 10, dans lequel les trous dans les supports ouverts ont un diamètre plus petit que les trous alignés dans les cartes de circuit imprimé.

12. Bloc-batterie selon l'une quelconque des revendications précédentes 1 à 11, dans lequel les embouts des tiges du premier sous-ensemble sont encastrés dans des renfoncements du profilé supérieur et/ou du profilé inférieur (6).

13. Bloc-batterie selon l'une quelconque des revendications précédentes 1 à 12, dans lequel les cellules sont disposées en rangées et en colonnes par couche, et dans lequel les cellules sont divisées en groupes non chevauchants de deux par deux cellules, et dans lequel une tige du premier sous-ensemble est fournie à travers le centre de chaque groupe.

14. Bloc-batterie selon l'une quelconque des revendications précédentes 1 à 13, dans lequel le profilé supérieur et/ou le profilé inférieur (6) ont une bride incurvée, qui repose contre un côté latéral de la couche supérieure et/ou inférieure respective et est reliée mécaniquement de manière amovible à la bride incurvée sur la couche supérieure et/ou inférieure respective.
